# EUROPÄISCHE PATENTANMELDUNG

(11) **EP 0 545 034 A2**
(43) Veröffentlichungstag der Anmeldung: **09.06.1993**
(21) Anmeldenummer: 92117266.4
(22) Anmeldetag: 09.10.1992
(51) Int. Cl.: B62D 5/04

(54) **Elektromotorische Servolenkung**

(30) Priorität: 30.11.1991 DE 4139558
(71) Anmelder: ROBERT BOSCH GMBH, 70442 Stuttgart (DE)
(72) Erfinder: Schlagmueller, Walter, Ing., W-7141 Schwieberdingen (DE)

(57) **Zusammenfassung**

Es sollen das Spiel und der Verschleiß einer Kupplung der Servolenkung ausgeglichen werden.

Die Servolenkung (10) besitzt einen dauernd laufenden Elektromotor (19), dessen Drehmoment bei Betätigen eines Lenkrades mittels drehrichtungsabhängig wirksamer Kupplungsbacken (35, 39) einer Kupplung (40) auf eine Lenkungs-Zahnstange übertragen wird. Die Kupplung (40) ist mit einer Spiel- und Verschleißausgleichseinrichtung (46) in Form eines federbelasteten Keils (44) versehen, der mit getrennten Teilbereichen (52, 53) auf die jeweilige Kupplungsbacke (35, 39) einwirkt.

Die elektromotorische Servolenkung ist bei Kraftfahrzeugen anwendbar.

## Beschreibung

### Stand der Technik

Die Erfindung geht aus von einer elektromotorischen Servolenkung nach der Gattung des Hauptanspruchs. Eine derartige Servolenkung ist älter angemeldet durch die deutsche Patentanmeldung P 41 04 048.1.

Beim Gegenstand dieser älteren Anmeldung handelt es sich um eine Servolenkung für Kraftfahrzeuge mit einem Untersetzungsgetriebe zwischen einem Servomotor und der Lenksäule bzw. dem zur mechanischen Radverstellung weiterführenden Abtrieb. Dabei ist je Wirkrichtung der Servolenkung eine Kupplungsbacke so angeordnet, daß sie eine Antriebsverbindung vom Servomotorantrieb zur Lenkgetriebeseite der Lenksäule dann herstellt, wenn bei manueller Momenteneinleitung am Lenkrad ein mit der Lenkradseite der Lenksäule verbundene Betätigungsnase den erforderlichen Kupplungsanpreßdruck durch mechanische Einwirkung auf die entsprechende Kupplungsbacke erzeugt, wobei unter der Kupplungseinwirkung stehende Zahnräder als Hohlzahnräder ausgebildet sind, die auf einer mit dem Abtriebslenksäulenbereich drehfest verbundenen Kupplungsnabe gelagert sind.

Dabei ist die Servolenkung so ausgebildet, daß für den Lenkstrang von der Kupplung bis zu der Lenksäule abtriebsseitig jedes Spiel eliminiert wird, um die Lenkung so exakt wie möglich zu machen.

Nun hat sich aber herausgestellt, daß die Spielausgleichseinrichtung beim Betätigen der Kupplung in unzulässiger Weise wirksam wird. Bei manueller Momenteneinleitung in einer Richtung wird nämlich die Klemmung des Keils aufgehoben, so daß dieser das vermeintliche Spiel ausgleicht. Beim Entlasten der Kupplung versuchen sich deren elastisch verformte Bauteile zu entspannen. Da aber der Keil in Selbsthemmung ist und nicht in seine vorherige Lage zurückkehrt, tritt eine Verspannung der Kupplung mit erhöhtem Kraftangriff der Kupplungsbacken an der Nabe auf. Dies hat zur Folge, daß beim Lenken im neutralen Zustand ein unnötig hoher Motorstrom fließt und der Verschleiß der Bauteile unzulässig hoch ist.

### Aufgabe der Erfindung

Der Erfindung liegt die Aufgabe zugrunde, diesen Nachteil zu vermeiden und eine Servolenkung der eingangs genannten Art zu schaffen, bei welcher der Spiel- und Verschleißausgleich von zwei, in unterschiedlichen Drehrichtungen der Kupplung wirkenden Kupplungsbacken weitgehend ohne deren gegenseitige Beeinflussung vorgenommen werden kann.

Diese Aufgabe wird bei einer gattungsgemäßen Servolenkung durch die kennzeichnenden Merkmale des Hauptanspruchs gelöst.

### Vorteile der Erfindung

Die erfindungsgemäße Servolenkung mit den kennzeichnenden Merkmalen des Hauptanspruchs hat den Vorteil, daß jede Kupplungsbacke entsprechend ihrem vorbekannten Verschleißverhalten mit dem hierauf abgestimmten, zugeordneten Teilbereich des Keils nachstellbar ist, wobei jedoch der Keil beim Betätigen der Servolenkung in jeder der beiden Richtungen einer Klemmung unterliegt, die ihn am Nachstellen hindert, bei einer nicht betätigten Servolenkung jedoch einen Spielausgleich durch Federkraftwirkung erlaubt.

Durch die in den Unteransprüchen aufgeführten Maßnahmen sind vorteilhafte Weiterbildungen und Verbesserungen der im Hauptanspruch angegebenen elektromotorischen Servolenkung möglich.

### Zeichnung

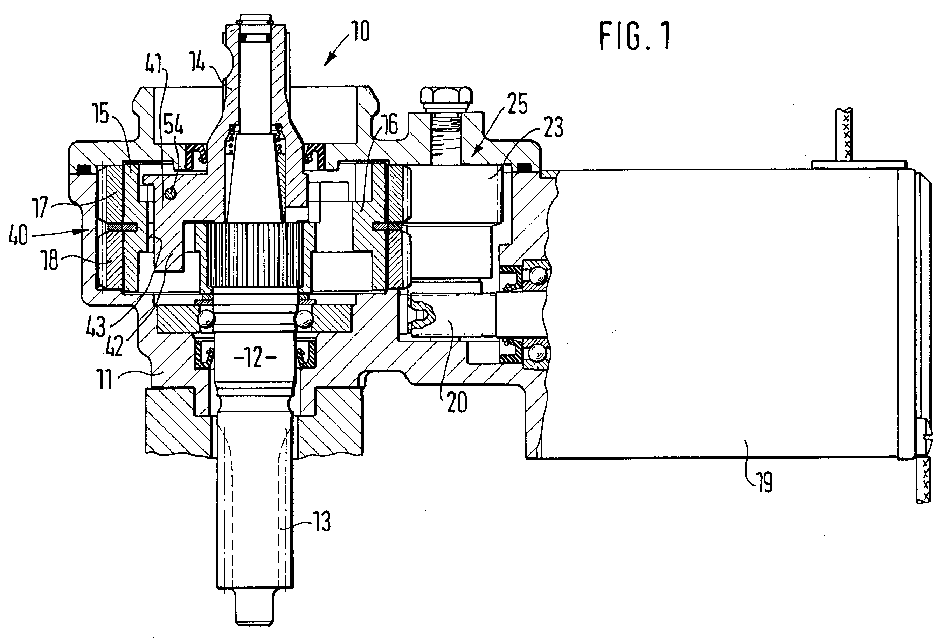

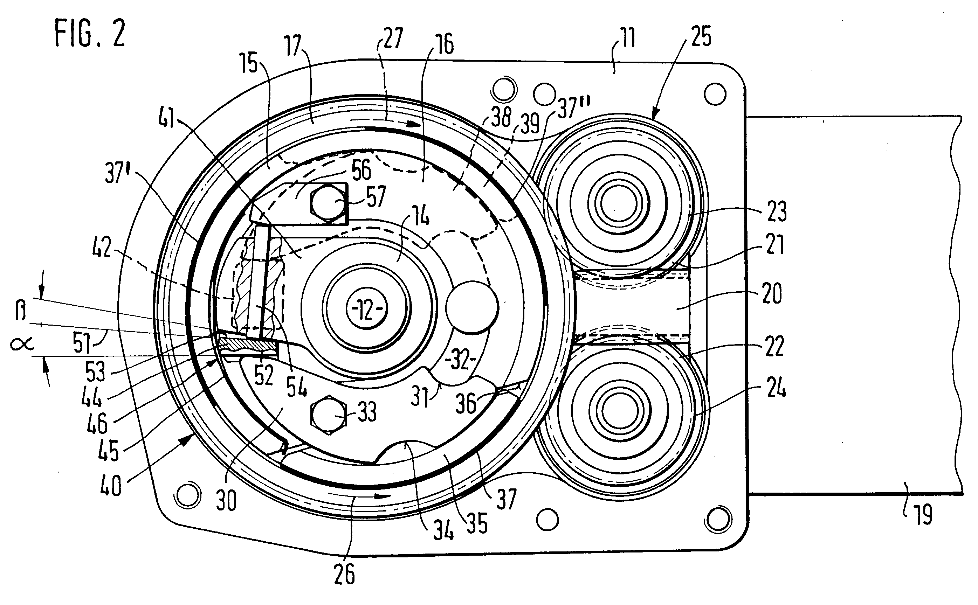

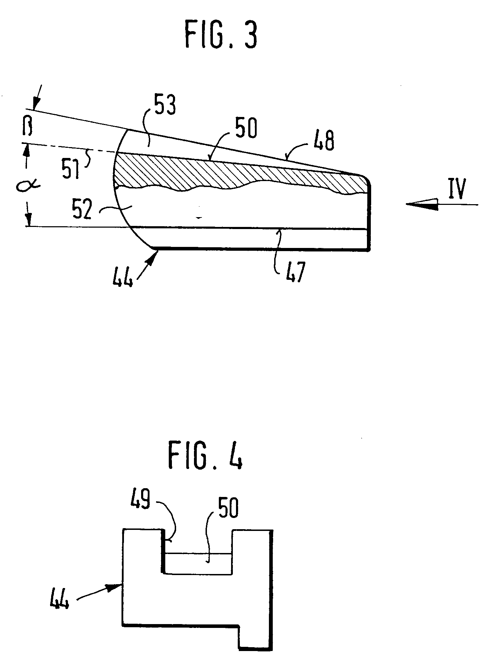

Ein Ausführungsbeispiel der Erfindung ist in der Zeichnung dargestellt und in der nachfolgenden Beschreibung näher erläutert. Es zeigen Figur 1 einen Längsschnitt der elektromotorischen Servolenkung, Figur 2 eine Draufsicht auf ein geöffnetes Gehäuse der Servolenkung mit einer Kupplung und einer von einem Keil gebildeten Spiel- und Verschleißausgleichseinrichtung, Figur 3 eine Draufsicht auf den Keil der Ausgleichseinrichtung, in anderem Maßstab, und Figur 4 eine Ansicht des Keils in Richtung des Pfeiles IV in Figur 3 gesehen.

### Beschreibung des Ausführungsbeispiels

Eine elektromotorische Servolenkung 10 besitzt ein Gehäuse 11 mit einer darin gelagerten Lenkwelle 12 (Figur 1 und 2). Die Lenkwelle 12 weist abtriebseitig ein Lenkritzel 13 zum Angriff an einer nicht dargestellten Lenkungs-Zahnstange für die mechanische Radverstellung eines Kraftfahrzeugs auf. Außerdem trägt die Lenkwelle 12 eine hohle Kupplungswelle 14, welche auf nicht dargestellte Weise mit einer Lenksäule und einem Lenkrad des Fahrzeuges in drehfester Verbindung steht. Im Gehäuse 11 der Servolenkung 10 ist gleichachsig zur Lenkwelle 12 eine drehfest mit dieser verbundene, hülsenförmige Nabe 15 mit einem mittigen, radial verlaufenden Boden 16 aufgenommen. Auf der Habe 15 sind umfangsseitig zwei übereinander angeordnete Hohlzahnräder 17 und 18 drehbar geführt. Für den Antrieb der Hohlzahnräder 17, 18 ist ein Elektromotor 19 als Servokraftgeber vorgesehen. Der Servomotor 19 treibt eine Schnecke 20 an, welche mit zwei Schneckenrädern 21 und 22 im Eingriff steht. Jedes Schneckenrad 21 bzw. 22 ist mit einem Zwischenrad 23 bzw. 24 verbunden. Das Zwischenrad 23 kämmt mit dem oberen Hohlzahnrad 17, das Zwischenrad 24 mit dem unteren Hohlzahnrad 18. Die Schnecke 20, die Schneckenräder 21, 22 die Zwischenräder 23, 24 und die Hohlzahnräder 17, 18 bilden ein die Drehzahl des Servomotors 19 untersetzendes Getriebe 25. Es bewirkt den Antrieb der Hohlzahnräder 17, 18 in entgegengerichteten Drehrichtungen: Während das obere Hohlzahnrad 17 im Gegenuhrzeigersinn (Pfeil 26) angetrieben wird, dreht das untere Hohlzahnrad 18 im Uhrzeigersinn (Pfeil 27).

Die Habe 15 trägt auf der Oberseite ihres Bodens 16 einen einarmigen Kupplungshebel 30, welcher an einem ein Lager 31 bildenden Ansatz 32 des Nabenbodens 16 abgestützt ist. Eine den Kupplungshebel 30 in einem nicht sichtbaren Langloch durchdringende Schraube sichert mit ihrem Schraubenkopf 33 den Kupplungshebel 30 in axialer Richtung. An einem Lager 34 des Kupplungshebels 30 ist eine dem Innenmantel des Hohlzahnrads 17 angepaßte Kupplungsbacke 35 abgestützt, welche eine Ausnehmung 36 der Habe 15 durchgreift. Die Kupplungsbacke 35 ist zahnradseitig mit einem Reibbelag 37 versehen. Ebenso weist die Nabe 15 im Bereich ihres Außenmantels Reibbeläge 37' und 37'' auf. Spiegelbildlich zu einer sich rechtwinklig zur Zeichenebene der Figur 2 erstreckenden Ebene, in welcher die Achse des Servomotors 19 sowie die Achse der Lenkwelle 12 liegen, ist die Habe 15 auf der Unterseite ihres Bodens 16 gleichfalls mit einem Kupplungshebel 38 und einer dem unteren Hohlzahnrad 18 zugeordneten Kupplungsbacke 39 versehen. Die Kupplungshebel 30, 38, die Kupplungsbacken 35, 39 bilden im Zusammenwirken mit dem jeweiligen Hohlzahnrad 17, 18 eine Kupplung 40 zum Übertragen des vom Servomotor 19 erzeugbaren Servomomentes auf die mit der Lenkwelle 12 verbundene Nabe 15 und von dieser auf das abtriebseitige Lenkritzel 13 bzw. auf die mit der Kupplungswelle 15 verbundene Lenksäule. Dabei wird der vom oberen Kupplungshebel 30 mit Kupplungsbacke 35 und oberem Hohlzahnrad 17 gebildete Kupplungsteil nachfolgend als Linkskupplung bezeichnet, der aus dem unteren Kupplungshebel 38 mit Kupplungsbacke 39 und unterem Hohlzahnrad 18 bestehenden Kupplungsteil als Rechtskupplung.

Zur Betätigung der Linkskupplung oder der Rechtskupplung ist die mit der Lenksäule verbundene Kupplungswelle 14 mit einer innerhalb der Nabe 15 liegenden Betätigungsnase 41 versehen. Diese weist einen nach unten gerichteten Zapfen 42 auf, welcher einen Durchbruch 43 im Nabenboden 16 mit geringem Verdrehspiel durchgreift. Auf der Unterseite des Nabenbodens 16 steht der Zapfen 42 mit dem freien Ende des unteren Kupplungshebels 38 in kraftschlüssiger Verbindung. Auf der Oberseite des Nabenbodens 16 ist dagegen zwischen dem freien Ende des oberen Kupplungshebels 30 und der Betätigungsnase 41 ein Keil 44 angeordnet. Der Keil 44 steht unter der Wirkung einer innen an der Nabe 15 abgestützten, vorgespannten Feder 45, welche bestrebt ist, den Keil 44 tiefer in den Spalt zwischen der Betätigungsnase 41 und dem Kupplungshebel 30 zu bewegen. Der Keil 44 steht somit in kraftschlüssiger Verbindung zwischen dem Kupplungshebel 30 und der Betätigungsnase 41; er bildet eine Spiel- und Verschleißausgleichseinrichtung 46 der Kupplung 40.

Der in den Figuren 3 und 4 vergrößert wiedergegebene Keil 44 weist eine den Kupplungshebel 30 zugeordnete Seitenfläche 47 und eine Seitenfläche 48 für den Angriff an der Betätigungsnase 41 auf. Von der Seitenfläche 48 her ist der Keil 44 mit einer Längsnut 49 versehen, deren Nutgrund 50 eine Bezugsebene 51 bildet, von der ausgehend sich auf der einen Seite ein Teilbereich 52 des Keils mit einem Keilwinkel α und auf der anderen Seite ein Teilbereich 53 des Keils mit einem Keilwinkel β erstreckt. Wie nachfolgend erläutert, bildet die Bezugsebene 51 eine Bewegungsbahn für den Keil 44 beim Spiel- und Verschleißausgleich. Die Bewegungsbahn des Keils 44 ist bezüglich der Nabe 15 durch einen die Betätigungsnase 41 parallel zum Habenboden 16 durchdringenden Stift 54 festgelegt. Dieser ist auf der vom Keil 44 abgewandten Seite der Betätigungsnase 41 an einem mit der Nabe 15 durch eine Schraube 55 befestigten Anschlag 56 mit seiner einen balligen Stirnseite abgestützt ist, während die andere ballige Stirnseite des Stifts 54 am Nutgrund 50 des Keils 44 angreift. Schließlich ist noch zu erwähnen, daß das Gehäuse 11 eine Ölfüllung enthält.

### Wirkungsweise

Beim Einschalten des Fahrzeug-Fahrschalters wird auch der Servomotor 19 in Betrieb gesetzt, welcher die Hohlzahnräder 17, 18 ständig in gegenläufiger Drehrichtung antreibt. Zum Einleiten einer Linkskurve wird vom Fahrer am Lenkrad ein Handmoment aufgebracht und durch die Lenksäule auf die Kupplungswelle 14 übertragen. Die Betätigungsnase 41 führt relativ zur Nabe 15 und zur Lenkwelle 12 eine Drehung im Gegenuhrzeigersinn aus. Diese wird vom Keil 44 auf den Kupplungshebel 30 übertragen, welcher die Kupplungsbacke 35 in Abhängigkeit von der Höhe des Handmoments mehr oder weniger stark gegen das Hohlzahnrad 17 preßt. In Abhängigkeit vom Anpreßdruck der Kupplungsbacke 35 wird das vom Servomotor 19 aufgebrachte Servomoment vom Hohlzahnrad 17 auf die Habe 15 und von dieser auf das Lenkritzel 13 der Lenkwelle 12 übertragen, so daß eine Unterstützung der Radverstellung erfolgt.

Beim Einleiten einer Rechtskurve bewirkt dagegen der Zapfen 42 der Betätigungsnase 41 eine Schwenkbewegung des zur Rechtskupplung gehörenden Kupplungshebels 38, der die zugeordnete Kupplungsbacke 39 in vom Handmoment abhängigen reibschlüssigen Kontakt mit dem Hohlzahnrad 18 bringt. Obwohl hierbei die Betätigungsnase 41 von der Seitenfläche 48 des Keils 44 abhebt, behält dieser seine Lage aufgrund der Klemmung zwischen dem Stift 54 und dem nicht betätigten Kupplungshebel 30 bei. Beim Betätigen der Linkskupplung wird dagegen der Keil 44 vom Stift 54 abgehoben, jedoch unterbleibt auch hier eine Verlagerung des Keils entlang der Betätigungsnase 41 aufgrund der Klemmung zwischen dieser und dem Kupplungshebel 30.

Bei nicht betätigter Kupplung 39 sind die Kupplungsbacken 35 und 39 mit sehr geringem Anpreßdruck am jeweiligen Hohlzahnrad 17, 18 abgestützt. Im Verlauf der Betriebsdauer der Servolenkung 10 auftretender Verschleiß an den Reibbelägen wird dadurch ausgeglichen, daß der Keil 44 durch die Kraft der Feder 45 entlang der Bezugsebene 51 als Bewegungsbahn vorwärts bewegt wird. Dabei bewirkt der Teilbereich 52 des Keils 44 eine Nachstellung des Kupplungshebels 30, während die Betätigungsnase 41 durch den Teilbereich 53 des Keils 44 eine Nachstellung erfährt, die über den Zapfen 42 auf den Kupplungshebel 38 übertragen wird. Da von der Bezugsebene 51 getrennte Teilbereiche 52 und 53 des Keils 44 die Nachstellung bewirken, können die Keilwinkel α und β auf das vorbekannte Verschleißverhalten der Reibbeläge 37, 37', 37'' an den Kupplungsbacken 35 und 39 sowie an der Nabe 15 abgestimmt sein. Dabei können die Winkel gleiche Größe haben oder, wie in Figur 3 deutlich dargestellt, unterschiedliche Größe besitzen. Mit der vom Keil 44 gebildeten Angleichseinrichtung 46 kann nicht nur Verschleiß sondern auch im Neuzustand beim Montieren der Servolenkung 10 zwischen den Elementen der Kupplung 40 vorliegendes Spiel ausgeglichen werden.

## Patentansprüche

1. Elektromotorische Servolenkung (10) für Kraftfahrzeuge mit einem Getriebe (25) zwischen einem Servomotor (19) und einer Lenksäule bzw. einem zur mechanischen Radverstellung weiterführenden Abtrieb und mit einer in zwei Drehrichtungen wirkenden Kupplung (40) zur Herstellung einer Antriebsverbindung vom Servomotor zur Lenksäule bzw. zum Abtrieb, wobei zwischen der Kuppung und der Lenksäule eine Spiel- und Verschleißausgleichseinrichtung (46) mit einem unter der Kraft einer Feder (45) stehenden Keil (44) vorgesehen ist, und wobei innerhalb der Kupplung eine mit der Lenksäule wenigstens mittelbar verbundene Betätigungsnase (41) angeordnet ist, die wenigstens mittelbar unter Zwischenlage des Keils auf zwei in einer mit dem Abtrieb verbundenen Nabe (15) der Kupplung gelagerte, je nach Drehrichtung der Lenksäule wirksame Kupplungsbacken (35, 39) einwirkt, dadurch gekennzeichnet, daß für den Keil (44) eine bezüglich der Nabe (15) festgelegte Bewegungsbahn (Nutgrund 50) als Bezugsebene (51) vorgesehen ist, von der sich zu beiden Seiten der jeweiligen Kupplungsbacke (35, 39) zugeordnete Teilbereiche (52, 53) des Keils erstrecken.

2. Elektromotorische Servolenkung nach Anspruch 1, dadurch gekennzeichnet, daß auf beiden Seiten eines Nabenbodens (16) je eine über einen Kupplungshebel (30, 38) betätigbare Kupplungsbacke (35, 39) angeordnet ist, von denen die eine Kupplungsbacke (35) vom einen Teilbereich (52) des Keils (44) und die andere Kupplungsbacke (39) über die Betätigungsnase (41) und eine den Nabenboden durchdringenden Zapfen (42) der Betätigungsnase vom anderen Teilbereich (53) des Keils wenigstens mittelbar einstellbar ist.

3. Elektromotorische Servolenkung nach Anspruch 2, dadurch gekennzeichnet, daß der Keil (44) über einen die Betätigungsnase (41) quer durchdringenden Stift (54) an einem nabenfesten Anschlag (56) abgestützt ist.

4. Elektromotorische Servolenkung nach Anspruch 3, dadurch gekennzeichnet, daß mindestens eine Stirnseite des Stiftes (54) ballig ausgebildet ist.

5. Elektromotorische Servolenkung nach Anspruch 3 oder 4, dadurch gekennzeichnet, daß der Keil (44) eine Längsnut (49) hat, an deren Grund (50) der Stift (54) mit seiner Stirnseite abgestützt ist, wobei der Nutgrund die Bezugsebene (51) bildet.
